# EUROPEAN PATENT APPLICATION

(11) **EP 3 654 544 A1**
(43) Date of publication of application: **20.05.2020**
(21) Application number: 18206061.6
(22) Date of filing: 13.11.2018
(51) Int. Cl.: H04B 7/06, H04B 7/185

(54) **A RECONFIGURABLE MULTIBEAM ANTENNA SYSTEM**

(71) Applicant: European Space Agency, 75738 Paris Cedex 15 (FR)
(72) Inventor: ANGELETTI, Piero, 2200 AG Noordwijk (NL); TOSO, Giovanni, 2200 AG Noordwijk (NL); PETROLATI, Daniele, 2200 AG Noordwijk (NL)
(74) Representative: Metroconsult Srl

(57) **Abstract**

A reconfigurable multibeam antenna system operating according to a beam hopping scheme on one or more subdomains of a field of view, the system comprising: an array of one or more radiating elements; a reconfigurable multibeam beamforming network having one or more inputs and one or more outputs; a plurality of reconfigurable subarray beamforming networks, each comprising: a sub-array of said one or more radiating elements; one or more control points to control one or more excitation parameters of said radiating elements of said subarray; one or more inputs coupled to at least one output of said multi-beam digital beamforming network; a control unit coupled to said multibeam beamforming network and to each of said analog beamforming networks; characterized in that said control unit: selects one of said subdomains of the field of view according to said beam hopping scheme; configures said control points of said plurality of reconfigurable subarray beamforming networks on the basis of said selected subdomain of the field of view; and, configures said multibeam beamforming network on the basis of said selected subdomain of the field of view.

## Description

### DESCRIPTION

### FIELD OF THE INVENTION

This invention relates to a reconfigurable multibeam antenna system for telecommunication multibeam satellite systems, radar systems for Earth Observation, terrestrial telecom applications such as 5G base stations, and military and civil radars. Specifically, the invention may be useful for generating a high number of beams in telecommunication multibeam satellite systems. It is believed that aspects of the present invention may be particularly beneficial for Very-High-Throughput-Satellites (VHTS). The invention also relates to a method, a control unit, and a computer programme for operating said reconfigurable multibeam antenna system.

### BACKGROUND OF THE INVENTION

Emerging telecommunication systems, such as for example, Very-High-Throughput-Satellites (VHTS) systems, require antennas with increased gain and isolation to cover a given field of view (e.g., the full Earth from the geostationary orbit). In particular, in order to achieve the best performances in terms of capacity, load balancing, and, more generally, service quality, it is desirable to divide a given field of view in multiple subareas each of which served by a specific antenna beam. These antennas should also be reconfigurable in terms of beams pattern and/or power. It is known that antenna systems based on active arrays are capable of simultaneously generating multiple beams; although such kind of systems represent the most performing solutions, for example in terms of isolation, they are characterised by high cost, complexity, mass, power consumption and dissipation. In addition, techniques such as beam-hopping, which consists in activating simultaneously only a limited subset of the total number of beams in a specific time instant and changing the beam illumination pattern over time, offer an unprecedented degree of flexibility to cope with highly spatial and temporal varying traffic demand across the coverage. Benefits of beam-hopping are fully acknowledged by satellite manufacturers and operators.

There is therefore a need for approaches, based on the beam hopping technique, that reduce the cost, complexity, and mass of the system.

### SUMMARY OF THE INVENTION

The invention is defined by the claims.

According to an aspect of the present invention, there is provided a reconfigurable multibeam antenna system operating according to a beam hopping scheme on one or more subdomains of a field of view, the system comprising:
- an array of one or more radiating elements;
- a reconfigurable multibeam beamforming network having one or more inputs and one or more outputs (said multibeam beamforming network can be analog or digital);
- a plurality of reconfigurable subarray beamforming networks, each comprising:
   i. a subarray of said one or more radiating elements;
   ii. one or more control points to control one or more excitation parameters of said radiating elements of said subarray;
   iii. one or more inputs coupled to at least one output of said reconfigurable multibeam beamforming network;
- a control unit coupled to said multibeam beamforming network and to each of said subarray beamforming networks;
characterized in that said control unit:
- selects one of said subdomains of the field of view according to said beam hopping scheme;
- configures said control points of said plurality of reconfigurable subarray beamforming networks on the basis of said selected subdomain of the field of view; and
- configures said multibeam beamforming network on the basis of said selected subdomain of the field of view.

A reconfigurable multibeam antenna system is one capable of simultaneously activating one or more beams over a given field of view; a beam is, in general, a directional radio signal transmitted or received from or to a multi beam antenna system. Unlike traditional systems where a large geographic area is typically illuminated by a single wide beam (i.e., a single radio signal), a multi beam antenna system is capable of simultaneously broadcasting multiple beams (i.e. multiple directional radio signals) over narrow subareas of the given field of view; a subarea is therefore a portion of the field of view illuminated by a single beam. A beam hopping scheme is a time domain technique for dynamically allocating the capacity of a telecommunication system by distributing the capacity over multiple subareas of a given field of view. Although the rest of the document will describe the present invention with respect to a transmitting system, the invention can be equally applied to a receiving system.

The inventors have recognized that one or more subareas can be logically grouped together to form one or more subdomains of the given field of view on the basis of the selection operated by the beam hopping scheme. A subdomain is a portion of the field of view comprising one or more subareas which are simultaneously illuminated by one or more beams according to the time division pattern of the beam hopping scheme.

Directional and multibeam antennas are typically implemented by connecting multiple radiating elements (i.e., also referred to as array of multiple radiating elements) to one or more transmitters; the radiating elements can be spatially disposed in one dimension (e.g., a linear array) or in two dimensions (e.g. a planar array).

Each of such radiating elements is typically fed with the signal to be transmitted in a predetermined time or phase relationship (i.e., prior to feeding the signal into each radiating element, the signal is shifted in time, phase and/or amplitude, i.e., excitation parameters, according to a predetermined configuration). The constructive and deconstructive interferences caused by the combination of the shifted signals simultaneously radiated by the radiating elements, modify the nominal propagation associated to each of said radiating elements. The combination of such shifted signals brings about the effect of enhancing the radiated power in a certain direction while reducing the radiated power in all other directions.

A beamforming network (BFN) is a system capable of generating one or more radio beams; it is typically equipped with one or more inputs and one or more outputs. Each input of the beamforming network is connected to a transmitting chain and fed with the signal to be transmitted in a predetermined direction; the outputs of a beamforming network are connected to the radiating elements. A beamforming network is mainly responsible for replicating the input signal over one or more radiating elements and for shifting such signals in a way to steer the power of the signal to be radiated in a predetermined direction. Beam forming networks can be analog or digital. Multibeam beamforming networks are capable of simultaneously generating multiple beams pointing in different directions; typically, multibeam beamforming networks are equipped with multiple inputs each of which corresponds to a specific beam. Reconfigurable beamforming networks further comprise one or more control points (or elements controls) to change the configuration (e.g., direction) of the generated beams.

Multibeam analog and digital beam forming networks are well known in the art; a reference example can be found in the paper by P. Angeletti, M. Lisi, "Beam-Forming Network Developments for European Satellite Antennas", (Special Report), Microwave Journal, Vol. 50, No. 8, Aug. 2007 and references therein; it is also well known that full multibeam digital BFNs represent the ideal solution for meeting the challenging reconfigurability requirements needed by the operators. Patent application WO2015092478A1, P. Angeletti and M. Lisi, describes a solution with reduced complexity for a reconfigurable multibeam digital BFN. However, with a drastic increase of the number of beams and/or number of radiating elements, the key drawback of digital BFNs is the complexity of the implementation calling for unaffordable mass and power consumption/dissipation resources; such drawbacks limit the application of multi-beam digital BFNs to low-to-moderate beam-widths (and, thus, number of beams). On the other hand, in addition to the already cited downsides of digital BFNs, large full analog BFNs are also not easily realisable.

The invention addresses these problems by introducing a two-layer BFN reconfigurable multibeam antenna system (e.g., a combination of digital and analog BFNs) comprising a layer of subarray BFNs (e.g., one or more identical analog BFNs) and a layer comprising a multibeam BFN (e.g., either analog or digital multibeam BFNs). Each subarray BFN groups together a subset of the total number of the radiating elements (i.e., subarray) comprised in the system. The radiating elements of a subarray may be exclusively associated to a single subarray BFN or, alternatively, part of the radiating elements of a subarray can be shared with adjacent subarrays and their related subarray BFN.

The number of output ports of each subarray BFN is equal to the number of radiating elements of the corresponding subarray and the number of input ports may be either one or a few. Each subarray BFN comprises a plurality of control points coupled to each of said radiating elements; each control point (e.g., a phase shifter) controls the excitation parameters (e.g., excitations phase, or phase and amplitude) associated to each of said radiating elements. The output ports of each subarray BFN are coupled to a plurality of radiating element. The one or more inputs of each subarray BFN is connected to at least one output of a multi-beam BFN.

This allows to maintain a high number of radiating elements (i.e., good performances in terms of, e.g., gain, sidelobes and spatial isolation) while greatly reducing the number of output ports of the multi-beam BFN (i.e., lower complexity); in fact, a conventional multibeam BFN would require a number of outputs equal to the number of radiating elements. Instead, according to an aspect of the present invention, the radiating elements are grouped together in subsets (i.e., subarrays) and then connected to the outputs of one or more subarray BFNs. As the number of inputs of each subarray BFN is less than the number of corresponding radiating elements (i.e., subarray), the number of required outputs of the multi-beam BFN is greatly reduced with respect to the conventional case in which a multibeam BFN is directly connected to each radiating element of the array. This saving is key as the multibeam BFN complexity directly scales with the number of outputs ports. One of the main goals of the present invention is to generate multiple beams with increased gain and isolation to cover a given field of view while reducing the complexity of the system.

According to an embodiment of the present invention, the reconfigurable multibeam antenna system comprises a modular array whose elements are organised in subarrays which can be partially overlapped. The reconfigurable multibeam antenna system may be thus partitioned in two layers:
- the subarray layer comprising one or more reconfigurable subarray BFNs, each one grouping together a subset of the total number of radiating elements (i.e., subarray); and,
- the multibeam layer comprising a multibeam BFN whose output ports are connected to the input ports of the subarray BFNs and whose input ports are equal to the number of beams to be generated simultaneously.

Additionally, according to an aspect of the present invention, the reconfigurable multibeam antenna system also comprises a control unit (e.g., a CPU or a set of distributed CPUs) coupled with both the above layers (i.e., the multibeam BFN and each of the subarray BFNs). Such control unit is responsible for configuring the layers of the reconfigurable multibeam antenna system on the basis of the one or more beams selected by the beam hopping scheme (and their related subareas). Such control unit can be either physically separated from the rest of the system or embedded in the circuitry of any one of the elements of the system; in addition, such control unit can be physically distributed over one or more elements of the system.

The inventors recognized that the antenna field of view can be partitioned in different subdomains, each of them corresponding, for example, to the portion of the field of view in which a subset of beams shall be simultaneously illuminated according to the beam-hopping scheme. In each subdomain several elementary beams may be, thus, simultaneously generated.

The antenna can be pointed to a subdomain by properly setting the excitation coefficients (e.g., excitations phase - or phase and amplitude) of the subarray BFNs control points. In addition, in the selected subdomain a number of beams may be activated by setting the elements controls of the multi-beam BFN. A two-levels reconfigurability is thus obtained by acting on the subarray BFN control points (in order to select a subdomain), and on the multibeam BFN elements controls (in order to point the elementary beams within the selected subdomain). The reconfigurability of the multibeam antenna may be based on a Double Beam Hopping (BH) scheme i.e. Hopping on Hopping or Hopping².

According to another aspect of the present invention, the selected subdomain of the field of view corresponds to one or more beams to be instantaneously illuminated over one or more sub-areas of said selected subdomain. As already explained above, each subdomain of the field of view can be obtained by logically grouping the beams that are simultaneously activated in a time period according to the time division pattern of the beam hopping scheme; each beam corresponds to a subarea of the given field of view to be illuminated. For example, the beam hopping scheme can alternatively select different subsets of beams to simultaneously illuminate one or more subareas of the field of view; the selected subdomain therefore comprises said one or more subareas corresponding to the subset of beams simultaneously activated by the beam hopping scheme in the same time period.

The multibeam beamforming network can be configured to instantaneously illuminate one or more beams over one or more sub-areas of said selected subdomain. As already said, each subdomain may correspond to a subset of beams to be instantaneously activated over one or more subareas. Therefore, the elements controls of the multibeam beamforming network can be configured to simultaneously activate one or more beams to illuminate one or more subareas comprised in said selected subdomain.

The control unit may further configure the control points (e.g., phase shifters) of said subarray beamforming networks to control the gain of the main lobes of each of said multiple beams. One of the goals of the invention is to reduce the number of output ports of the multibeam BFN while maintaining good performances in terms of isolation and gain. The two-level re-configurable system according to the present invention can achieve such goal by acting on the control points of the subarrays BFNs; in fact, along with setting the elements controls of the multibeam BFN, the control points of each subarray BFN can be configured to improve the gain of the main lobes of the beams associated to said selected subdomain. Alternatively, or in addition, the control unit may further configure the control points of said analog BFN to move grating lobes out of said selected subdomain of the field of view.

According to an embodiment of the present invention, the subarray BFNs are analog beam forming networks. A reference example can be found at chapter 7.8, Feed Networks (Beamformers) of M I Skolnik (Editor), Radar Handbook (2nd Ed), McGraw-Hill, 1990. Also provided is a method for operating a reconfigurable multi beam antenna system as described above, the method comprising the steps of:
- selecting a subdomain of the field of view according to said beam hopping scheme;
- configuring said multi-beam beamforming network on the basis of said selected subdomain of the field of view;
- adjusting the phase shifters of said plurality of reconfigurable analog beamforming networks on the basis of said selected subdomain of the field of view.

According to another aspect of the invention, there is provided a control unit and a computer program comprising computer program code adapted to perform all the steps of the method summarized above.

### BRIEF DESCRIPTION OF THE DRAWINGS

The invention will now be described by way of example with reference to the accompanying drawings, in which:
Fig. 1 is a schematic drawing showing a conventional analog multibeam antenna based on active arrays.
Fig. 2 shows the radiation pattern of a single radiating element, the array factor of an array pointing in the boresight direction (e.g., constant phase), and the total radiation pattern of the array of radiating elements pointing in the boresight direction.
Fig. 3 shows the radiation pattern of a single radiating element, the array factor pointing out of the boresight direction, and the total radiation pattern of the array of radiating elements pointing out of the boresight direction.
Fig. 4 shows the evolution of the main beam and grating lobe in the uv-space while scanning the phased array.
Fig. 5 is a schematic drawing showing a realistic example of a phased array antenna comprising a reconfigurable BFN for a GEO mission. In this example, the periodicity of 3λ is the maximum one in order to keep the grating lobes (i.e., interferences) out of the visible area.
Fig. 6 depicts the radiation pattern of a single radiating element, the array factor, and the total radiation pattern of the phased array antenna depicted in Fig. 5.
Fig. 7 is a schematic drawing showing a phased array antenna comprising a reconfigurable BFN with a periodicity of 6λ.
Fig. 8 depicts the radiation pattern of a single radiating element, the array factor, and the total radiation pattern of the phased array antenna depicted in Fig. 7.
Fig. 9 is a schematic drawing showing a reconfigurable multi-beam antenna system according to an embodiment of the present invention. The multibeam BFN has a periodicity of 6λ; each analog BFN comprises three radiating elements with periodicity 2λ.
Fig. 10 shows the radiation pattern of a single radiating element (i.e., element factor, 1000), the subarray factor (1001), the array factor (1002), and the total radiation pattern (1003) of the reconfigurable multi-beam antenna system according to the embodiment of the present invention depicted in Fig. 9.
Fig. 11 shows the decomposition of a large field of view into two smaller subdomains according to an aspect of the present invention. Each subdomain is illuminated at separate times according to the beam hopping scheme.
Fig. 12 depicts the illumination pattern of the entire field of view provided by an embodiment of the present invention over multiple periods of the beam hopping scheme.

### DETAILED DESCRIPTION

An embodiment of the present invention relates to a reconfigurable multibeam antenna system operating according to a beam hopping scheme; the invention aims at reducing the complexity of the components of the systems while guaranteeing high performances in terms of gain and isolation. The invention is particularly useful in Very-High-Throughput-Satellites (VHTS), generic telecommunication multibeam satellite systems, radar systems for Earth Observation, terrestrial telecom applications such as 5G base stations, and military and civil radars.

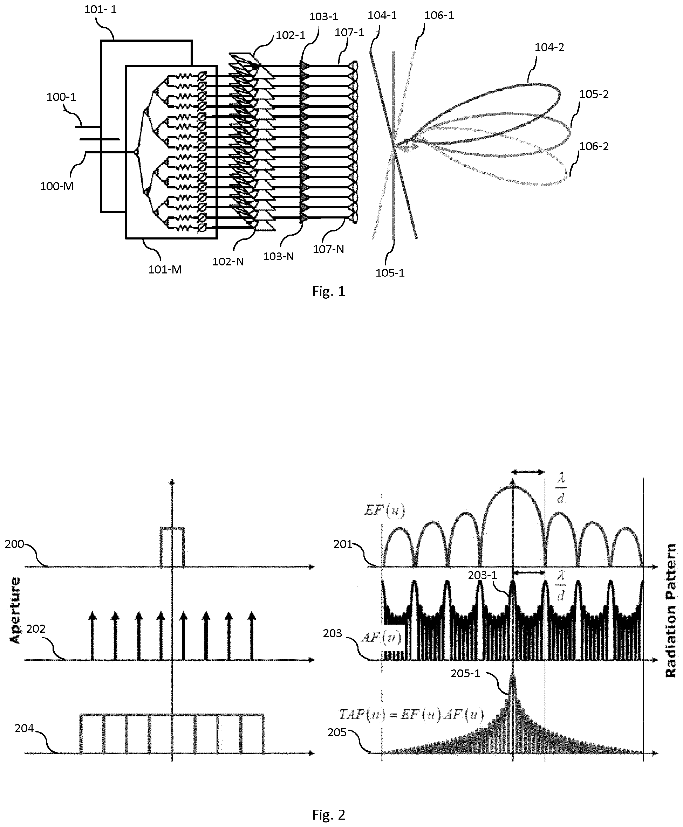

Fig. 1 depicts a conventional multibeam BFN based on active arrays with M inputs (100-1, 100-M) and N radiating elements (107-1, 107-N). Each input is associated to a specific beam (104-2, 105-2, 106-2) pointing in a desired direction (104-1, 105-1, 106-1); for the sake of simplicity, the picture shows only three beams (104-2, 105-2, 106-2). Each beam is generated by a single-beam beamforming network (101-1, 101-M) comprising one or more control points (e.g., phase shifters) for configuring the excitation parameters corresponding to each radiating element of the antenna array (107-1, 107-N). The outputs of each single-beam BFN are firstly combined together (102-1, 102-N) and then fed into the radiating elements of the antenna array. The properties of each beam (e.g., direction) can be controlled by properly configuring the excitation parameters (excitations phase - or phase and amplitude) of the corresponding single-beam BFN. The complexity of the multibeam BFN, either analog or digital, is proportional to the product between the number of inputs (M) and the number of radiating elements (M), i.e., NxM. When both numbers are in the order of the '1000s, as in the emerging VHTS applications, conventional antennas become unfeasible. Therefore, a fully reconfigurable BFN according to known techniques is impractical for many applications with high number of elements and/or beams.

Fig. 2, shows an example of radiation pattern of an antenna array characterised by a periodic arrangement of radiating elements. By way of non-limiting example, a uniform amplitude and phase illumination is considered for each radiating element. The rectangular element (200) shown on the left side of the first line of Fig. 2, represents a single radiating antenna with dimension d. The corresponding radiation pattern (201) shown on the right side of the first line of Fig. 2, also called Element Factor, exhibits, in the u-space, nulls in directions proportional to λ/d being λ the wavelength. The comb of δ-Dirac functions (202), on the left side of the second line, represents the periodic arrangement of the radiating elementary antennas composing the array. Their corresponding radiation pattern (203), also called Array Factor, is shown on the right side of the second line of Fig. 2; it presents the so-called grating lobes caused by aliasing. The grating lobes, associated to the periodic structure, represent replicas of the central main beam (203-1) of the array antenna and appear in the u-space in directions proportional to λ /d. As well known in the art, the total radiation pattern, according to the pattern multiplication effect, is obtained by simply multiplying the Element Factor by the Array Factor. The resulting total radiation pattern (205), presented on the right side of the third line of Fig. 2, in the case of a linear periodic array, presents a main beam (205-1) in the boresight direction (i.e. in the direction perpendicular to the array aperture); on the contrary, grating lobes have been perfectly cancelled out by the nulls appearing in the Element factor. It is worth noting that cancelling out the grating lobes from the total radiation pattern is beneficial; in fact, the presence of grating lobes within the field of view of a directional antenna would compromise the directionality of the antenna system while causing interferences to other beams. In practice, in the total radiation pattern (205), the granularity of the array does not appear; such total radiation pattern could be equally generated by a linear antenna characterised by a continuous (i.e., not discretised) excitation.

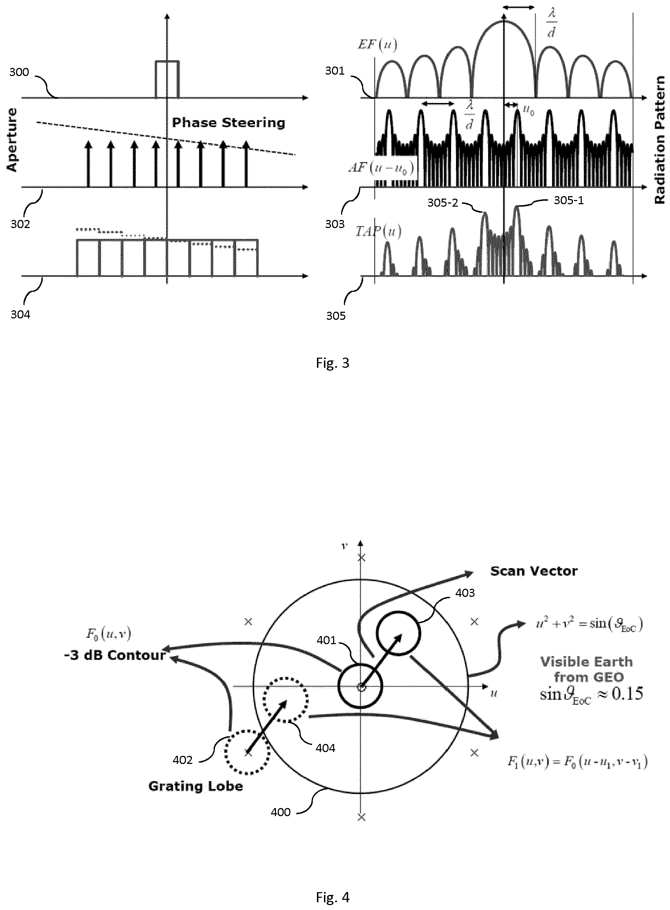

Fig. 3, shows an example of a radiation pattern of an antenna array characterised by a periodic arrangement of radiating elements where the main beam of the total radiation pattern is scanned in a desired direction; to this end, a linear phase tapering is applied in the array aperture by properly setting the excitation parameters corresponding to each radiating element of the array. Accordingly, the Array Factor (303) is translating in the u-space while the Element Factor (301) remains unchanged. As an overall result, the total radiation pattern (305), given as the product of the Array Factor (303) and Element Factor (301), is exhibiting now a main beam (305-1), pointing in a direction different from the boresight direction, and grating lobes (e.g., 305-2) with variable height depending on the Element Factor acting as weighting factor. The perfect cancellation of the grating lobes visible in Fig. 2 is achievable only when the phased array is pointing in the boresight direction, i.e. in the direction perpendicular to the array aperture. For planar array antennas characterised by a periodic lattice along two axes, grating lobes like the array pattern have to be visualised in two-dimensions.

Fig. 4 shows the evolution of the main beam and the related grating lobes in the uv-space while scanning the phased array (e.g., pointing the antenna from the boresight direction to a different direction within the field of view). Circle 400 represents the entire field of view of the antenna array. Circle 401 depicts the subarea within the field of view (400) illuminated by the main beam (205-1) of an antenna array pointing in the boresight direction; circle 402 depicts the subarea illuminated by one of its grating lobes. In this case, the potential negative effect brought about by the grating lobe is negligible as the area illuminated by such grating lobe is located outside of the field of view. Circle 403 represents the subarea illuminated by the main beam (305-1) of the same antenna array when pointing in a direction different from the boresight direction; circle 404 represents its related grating lobe (305-2). Under such circumstances, as the main beam (403) moves off from the boresight direction, the subarea illuminated by the grating lobe (404) is pulled within the field of view; this is clearly an undesirable effect (e.g., interference) as the gain of such grating lobe is usually non-negligible. As described in the rest of the document, when scanning the main beam of a phased array, one of the key design factors for keeping any grating lobe out of the field of view is the spacing within radiating elements.

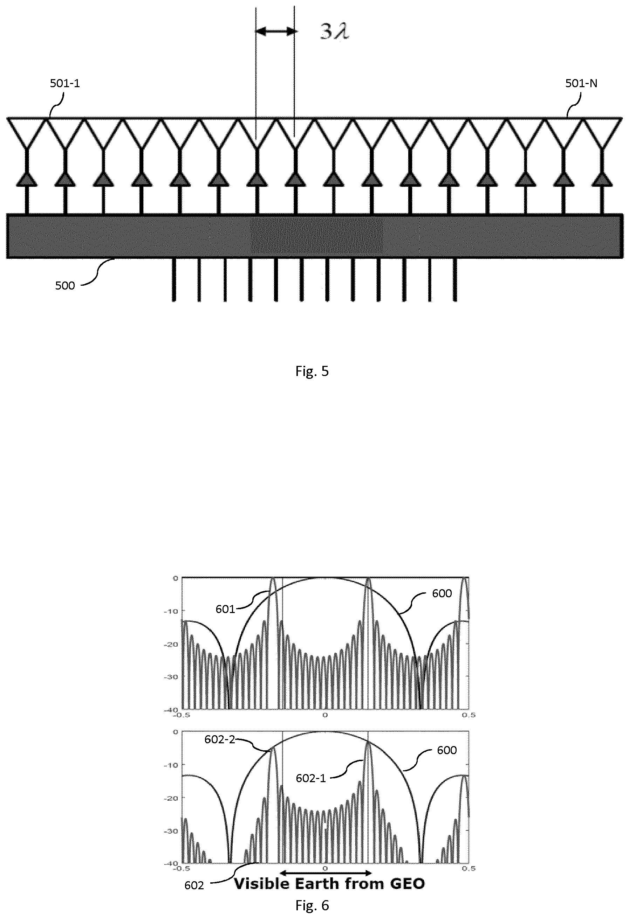

Fig. 5 is a schematic drawing showing an example of a phased array antenna system comprising a reconfigurable multibeam BFN (500) and an array of radiating elements (501-1, 501-N) designed for a GEO satellite covering the full earth from the GEO orbit. As explained below, the maximum separation between each radiating element required to keep the grating lobes out of the visible area is 3λ.

Fig. 6 shows the element factor (600), the array factor (601), and the total radiation pattern (602) of the phased array antenna depicted in Fig. 5; in order to find the separation that guarantees, for any direction of the main beam, the removal of any grating lobes from the field of view, it is enough to study the case where the main beam points at the end of the Earth coverage. As evident in the bottom part of Fig. 6, the Total Radiation Pattern (602) presents the main beam (602-1) exactly pointing at the end of the coverage area on the right part of the figure. In the left part of the same figure it is visible the first grating lobe (602-2) which remains, as desired, immediately out of the coverage area.

For emerging VHTS applications phased array antennas composed by at last 1000 elements are required. The typical dimensions of these phased arrays may range from 2 meters to 5 meters depending on the beam dimensions. Accordingly, the number of beams required to completely illuminate a full Earth coverage may range (in the Ka band) from about 1000 to about 5000. As mentioned above, the complexity of a conventional phased array antenna and beamforming network is proportional to the product of the number of radiating elements of the array times the number of beams. This number would exceed 1 million and the associated antenna system does not appear to be feasible today in view of its complexity.

A simpler solution, retaining sufficient flexibility is therefore necessary. At the same time solutions permitting to increase the number of beams, reducing accordingly their size, and the number of radiating elements are necessary.

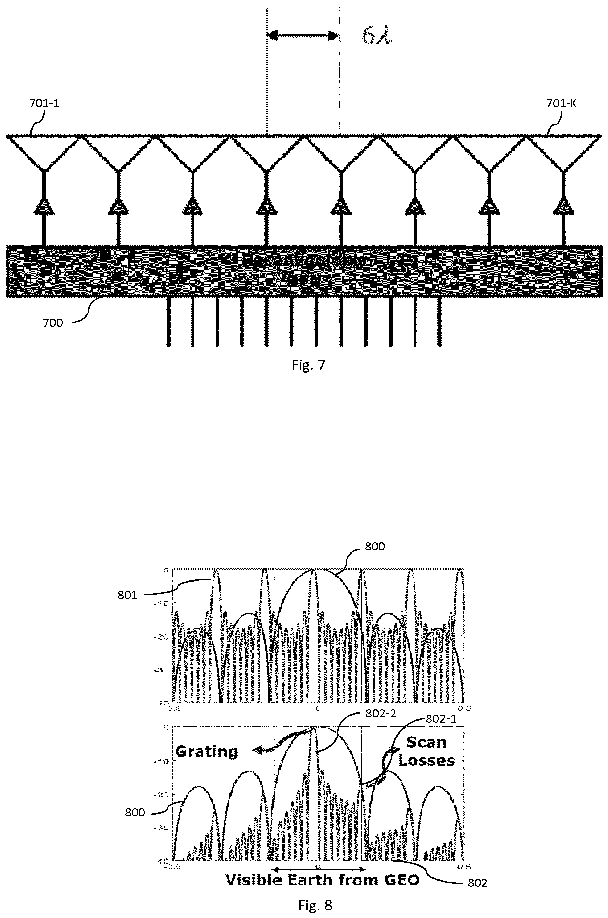

Fig. 7 depicts a schematic drawing showing an example of a phased array antenna system comprising a reconfigurable multibeam BFN (700) and an array of radiating elements (701-1, 701-K). In this example, an increase by a factor 2 of the periodicity of the radiating elements (i.e. from 3λ to 6λ with respect to the example of Fig. 5) results in a saving factor 2, for linear phased arrays, and 4, for planar phased arrays, at overall antenna level in the number of radiating elements and system complexity. In fact, as compared to the example shown in Fig. 5, the number of output ports of the multibeam beamforming network of the configuration presented in Fig. 7, is decreased by a factor 2 (i.e., K=N/2). Unfortunately, although being an important improvement in terms of reduced complexity, the performances of such system, in terms of isolation and gain, do not meet with the requirements of nowadays telecommunication standards.

Fig. 8 shows the element factor (800), the array factor (801), and the total radiation pattern (802) of the phased array antenna system depicted in Fig. 7.

The total field of view achievable by the phased array antenna system depicted in Fig. 7 is drastically reduced with respect to the field of view achievable by the phased array antenna system depicted in Fig. 7; more importantly, the scan losses are significantly increased as the gain of the main beam (802-1) is constrained by the shape of the array factor (800). Another significant drawback of the system of Fig. 7 is the presence of grating lobes inside the field of view (802-2); in fact, as already explained above, when within the field of view, the grating lobes can cause undesired interferences to other beams illuminating the same subarea of the field of view. Such performances are clearly not suitable for the challenging requirements of nowadays telecommunication systems in terms of reconfigurability and isolation. There is therefore a need of innovative solutions capable of guaranteeing a reduced complexity of the system (e.g., by limiting the number of required output element ports of the multibeam BFN) while maintaining the performances in terms of gain and isolation at an acceptable level (e.g., by limiting the scan losses while keeping the grating lobes outside the instantaneous field of view).

According to an aspect of the present invention, the total field of view may be logically divided in subdomains (i.e., reduced fields of view); the composition of such subdomains is preferably related to the operating beam hopping scheme. A subdomain may conveniently contain the subset of subareas which are simultaneously illuminated by multiple beams; each subarea within a specific subdomain is the area of the field of view illuminated by at least one beam. According to an aspect of the present invention, the antenna system is configured to alternatively illuminate a reduced field of view (i.e., a subdomain) according to the set of beams selected by the operating beam hopping scheme.

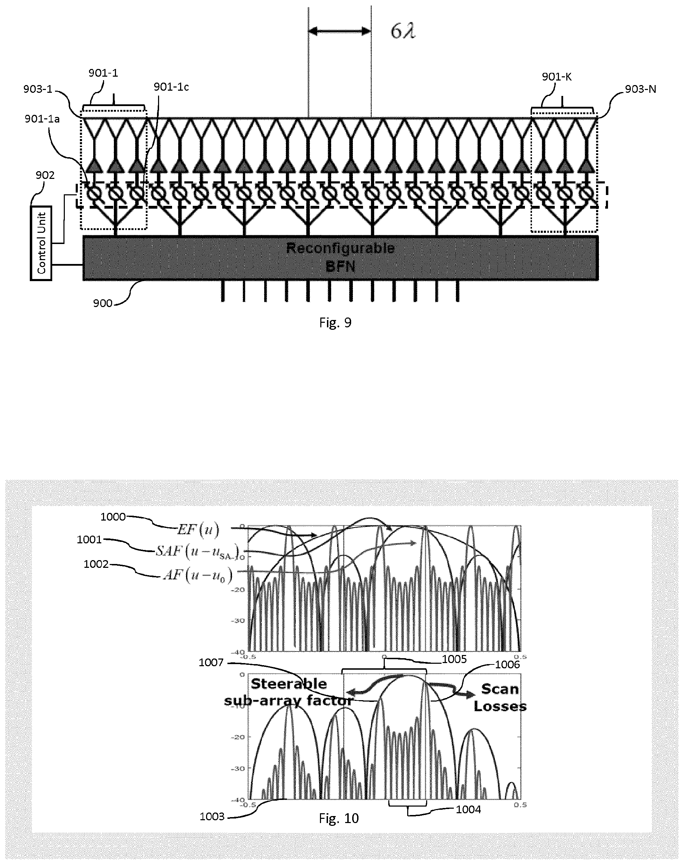

Fig. 9 is a schematic drawing showing a reconfigurable multibeam antenna system according to an embodiment of the present invention; it comprises a reconfigurable multibeam BFN (900) and an array of radiating elements (903-1, 903-N). The multibeam BFN comprises elements controls to configure the parameters (i.e., direction) of the generated beams. Such array of radiating elements is logically grouped in subarrays each of which is coupled to a subarray beamforming network (901-1, 901-K; with K=N/3). Each of said subarray BFNs comprises at least one input which is coupled to at least one output of the multibeam BFN (700); each of said subarray BFNs further comprises one or more control points (901-1a, 901-1c) for configuring the excitation parameters corresponding to each of the radiating elements of the subarray. The reconfigurable multibeam antenna system may also comprise a control unit (902) coupled to both the multibeam BFN and to each of said subarray BFNs (901-1, 901-K); said control unit is configured to adjust the control points of the subarray BFNs (901-1, 901-K) and the element controls of the multibeam BFN (900). As the complexity of the multi-beam BFN is proportional to the number of its outputs, a desired level of complexity can be achieved by conveniently grouping together the radiating elements in order to limit the number of subarray BFNs coupled to the multibeam BFN.

In order to address the problems of isolation and gain already described in relation to the antenna array system of Fig. 7, each subarray BFN (901-1, 901-K) further comprises at least one control point for each of said radiating elements aimed at setting the excitation parameters (e.g., excitations phase, or phase and amplitude) associated to each of said radiating elements. By way of non-limiting example, such subarray BFNs can be embodied by analog BFNs where such control points are phase shifters; alternatively, such subarray BFNs can be embodied by digital BFNs. By configuring the control points of each subarray BFN (901-1, 901-K), the subarray factor can be adjusted in order to properly fit a specific subdomain of the entire field of view of the antenna (e.g., half of the total coverage in the u-space). As already said, such subdomain may conveniently contain the set of subareas which are simultaneously illuminated by a subset of beams during a time slot. According to an aspect of the present invention, the control unit (902) can be configured to operate in combination with the beam hopping scheme; for example, at each time slot (e.g., a period of time within the alternating pattern of a time division multiplexing scheme) the control unit (902) may select a subdomain of the total field of view according to the sets of beams selected by the beam hopping scheme.

Fig. 10 shows the radiation pattern of a single radiating element (i.e., element factor, 1000), the subarray factor (1001), the array factor (1002), and the total radiation pattern (1003) of the reconfigurable multi-beam antenna system according to the embodiment of the present invention depicted in Fig. 9. By configuring the control points (i.e., adjusting the excitation parameters) of the subarray BFNs, the array factor (1002) can be conveniently steered to frame the portion of the field of view corresponding to the selected subdomain (1004) (i.e., half right portion of the total field of view).

As shown in Fig. 10, the main beam (1006) of the total radiation pattern is located on the right side at the end of the total field of view (1005). As it can be appreciated in Fig. 10, the main beam (1006) is not affected by any significant scan loss (i.e., the gain of the main beam is not attenuated by the subarray factor); at the same time, thanks to the reduced spacing between each radiating element, the grating lobe (1007) is well outside of the selected subdomain (1004).

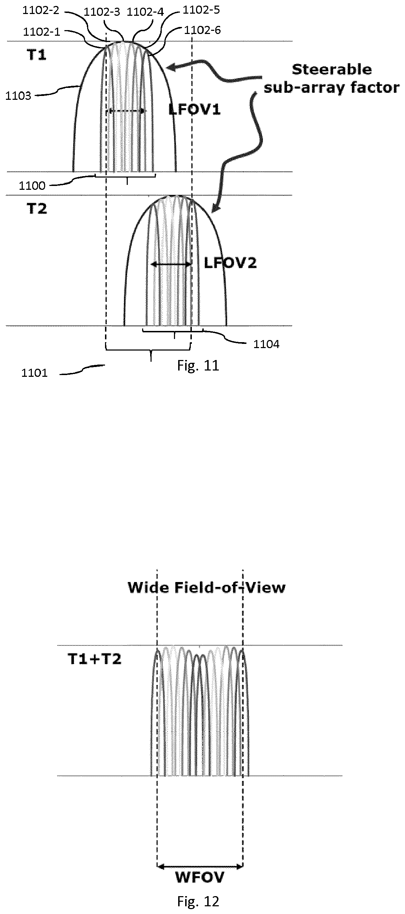

With reference to Fig. 11, during time slot T1, a set of beams (1102-1, 1102-2, 1102-3, 1102-4, 1102-5, 1102-6) needs to be activated according to the beam hopping scheme operating on the system; the control unit may select the subdomain (1100) of the total field of view (1101) on the basis of such set of beams and their relative subareas (i.e., the areas illuminated by each beam). On the basis of such selected subdomain, the control unit appropriately configures the control points of the subarray BFNs (i.e., excitation coefficients); for example, the excitation coefficients of the subarray BFNs can be configured to steer the subarray factor (1103) over the selected subdomain. In this case, the subdomain associated to the selected set of beams is the left half of the total field of view (1100). As explained above, this results in the exclusion of the grating lobes from the selected subarea along with a reduction of the scan losses (i.e., optimization of the gain of each beam). In addition to the configuration of the subarray BFNs, the multi-beam BFN (900) can be configured, by means of the elements controls, to simultaneously activate the selected set of beams (1102-1, 1102-2, 1102-3, 1102-4, 1102-5, 1102-6) over multiple subareas of said selected subdomain.

During time slot T2, a new set of beams need to be activated; the control unit may repeat the same routine described above for the subdomain corresponding to said new set of beams. In this case, the subdomain associated to the selected set of beams is the right half of the total field of view (1104). Finally, Fig. 12 shows the superposition of the subdomains selected during time periods T1 and T2.

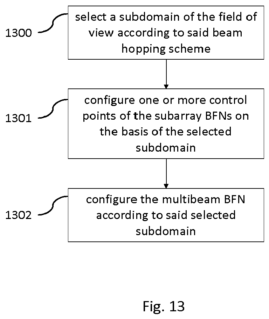

Another embodiment of the present invention relates to a method for operating a reconfigurable multi beam antenna system according to the embodiment of the invention described above. As shown in Fig. 13, the method comprises a first step (1300) for selecting a subdomain of the field of view according to said beam hopping scheme; for example, such subdomain may be selected on the basis of the subareas which need to be simultaneously illuminated during a specific time slot. At step 1301, one or more control points of the subarray BFNs are configured on the basis of the subdomain selected at step 1300; for example, such control points may be configured to steer the subarray factor over the selected subdomain. At step 1302, the multibeam BFN is configured according to said selected subdomain; for example, the multibeam BFN can be configured to activate the set of beams that needs to be instantaneously illuminated over the selected subdomain.

Another embodiment of the present invention relates to a control unit and a computer program comprising computer code adapted to perform the steps of the method described above.

It is easily understandable that the present invention is not limited to the embodiments described above but it is liable to various modifications, improvements, parts and equivalent elements replacement without departing from the idea of the invention, as it is better specified in the following claims.

## Claims

1. A reconfigurable multibeam antenna system operating according to a beam hopping scheme on one or more subdomains of a field of view, the system comprising:
an array of one or more radiating elements;
a reconfigurable multibeam beamforming network having one or more inputs and one or more outputs;
a plurality of reconfigurable subarray beamforming networks, each comprising:
i. a sub-array of said one or more radiating elements;
ii. one or more control points to control one or more excitation parameters of said radiating elements of said subarray;
iii. one or more inputs coupled to at least one output of said multi-beam digital beamforming network;
a control unit coupled to said multibeam beamforming network and to each of said analog beamforming networks;
**characterized in that** said control unit:
selects one of said subdomains of the field of view according to said beam hopping scheme;
configures said control points of said plurality of reconfigurable subarray beamforming networks on the basis of said selected subdomain of the field of view; and,
configures said multibeam beamforming network on the basis of said selected subdomain of the field of view.

2. A reconfigurable multibeam antenna system according to claim 1 wherein said selected subdomain of the field of view corresponds to one or more beams to be instantaneously illuminated over one or more sub-areas of said selected subdomain.

3. A reconfigurable multibeam antenna system according to claim 2 wherein said multibeam beamforming network is configured to instantaneously illuminate one or more beams over one or more sub-areas of said selected subdomain.

4. A reconfigurable multibeam antenna system according to any of the preceding claims wherein said one or more subarray beamforming networks are analog beamforming networks.

5. A reconfigurable multibeam antenna system according to any of the preceding claims wherein said multi-beam beamforming network is a reconfigurable analog multibeam beamforming networks.

6. A reconfigurable multibeam antenna system according to any of the preceding claims wherein said multi-beam beamforming network is a reconfigurable digital multibeam beamforming networks.

7. A reconfigurable multibeam antenna system according to any of the preceding claims wherein said control unit further configures said control points of said plurality of reconfigurable subarray beamforming networks to control the gain of the main lobes of each of said multiple beams.

8. A reconfigurable multibeam antenna system according to any of the preceding claims wherein said control unit further configures said control points of said plurality of reconfigurable subarray beamforming networks to move grating lobes out of said selected subdomain of the field of view.

9. A reconfigurable multibeam antenna system according to any of the preceding claims wherein said control unit further configures said control points of said plurality of reconfigurable subarray beamforming networks to steer the radiation pattern of said sub-array to fit said selected subdomain.

10. A method for operating a reconfigurable multibeam antenna system comprising:
an array of one or more radiating elements;
a reconfigurable multibeam beamforming network having one or more inputs and one or more outputs;
a plurality of reconfigurable subarray beamforming networks, each comprising:
i. a sub-array of said one or more radiating elements;
ii. one or more control points to control one or more excitation parameters of said radiating elements of said subarray;
iii. one or more inputs coupled to at least one output of said multi-beam beamforming network;
the method comprising the steps of:
selecting a subdomain of the field of view according to said beam hopping scheme;
configuring said control points of said plurality of reconfigurable subarray beamforming networks on the basis of said selected subdomain of the field of view; and,
configuring said multibeam beamforming network on the basis of said selected subdomain of the field of view.

11. A method according to claim 10 wherein said selected subdomain of the field of view corresponds to one or more beams to be instantaneously illuminated over one or more sub-areas of said selected subdomain.

12. A method according to claim 10 wherein said multibeam beamforming network is configured to instantaneously illuminate one or more beams over one or more sub-areas of said selected subdomain.

13. A method according any one of claims 10 to 12 wherein said control points of said plurality of reconfigurable subarray beamforming networks are further configured to control the gain of the main lobes of each of said multiple beams.

14. A method according to any one of claims 10 to 13 wherein said control points of said plurality of reconfigurable subarray beamforming networks are further configured to move grating lobes out of said selected subdomain of the field of view.

15. A method according to any one of claims 10 to 14 wherein said control points of said plurality of reconfigurable subarray beamforming networks are further configured to steer the radiation pattern of said sub-array to fit said selected subdomain.

16. A control unit for controlling a reconfigurable multibeam antenna system, said reconfigurable multibeam antenna system comprising:
an array of one or more radiating elements;
a reconfigurable multibeam beamforming network having one or more inputs and one or more outputs;
a plurality of reconfigurable subarray beamforming networks, each comprising:
i. a sub-array of said one or more radiating elements;
ii. one or more control points to control one or more excitation parameters of said radiating elements of said subarray;
iii. one or more inputs coupled to at least one output of said multi-beam beamforming network;
said control unit being configured to:
select one of said subdomains of the field of view according to said beam hopping scheme;
configure said control points of said plurality of reconfigurable subarray beamforming networks on the basis of said selected subdomain of the field of view; and,
configure said multibeam beamforming network on the basis of said selected subdomain of the field of view.

17. A computer programme comprising computer code for executing a method according to any one of claims 10 to 15.
